# EUROPÄISCHE PATENTSCHRIFT

(11) **EP 0 842 072 B1**
(45) Veröffentlichungstag und Bekanntmachung des Hinweises auf die Patenterteilung: **15.03.2000**
(21) Anmeldenummer: 96927012.3
(22) Anmeldetag: 16.07.1996
(51) Int. Cl.: B60T 8/42, B60T 8/48, B60T 8/26

(54) **HYDRAULISCHE KRAFTFAHRZEUGBREMSANLAGE MIT RADSCHLUPFREGELUNG**
HYDRAULIC MOTOR VEHICLE BRAKING SYSTEM WITH WHEEL SLIP CONTROL
SYSTEME DE FREINAGE HYDRAULIQUE POUR AUTOMOBILE AVEC REGULATION ANTIPATINAGE

(30) Priorität: 28.07.1995 DE 19527705
(43) Veröffentlichungstag der Anmeldung: 20.05.1998
(73) Patentinhaber: Continental Teves AG & Co. oHG, 60488 Frankfurt (DE)
(72) Erfinder: VOLZ, Peter, D-64291 Darmstadt (DE)
(86) Internationale Anmeldenummer: EP9603111
(87) Internationale Veröffentlichungsnummer: WO9704998

(56) Entgegenhaltungen:
- DE-A- 2 154 806
- DE-A- 4 016 745
- DE-A- 4 132 469
- DE-A- 4 132 470
- DE-A- 4 209 705
- DE-A- 4 333 568
- JP-A- 6 171 487
- PATENT ABSTRACTS OF JAPAN vol. 18, no. 576 (M-1697), 4.November 1994 & JP,A,06 211120 (AISIN SEIKI), 2.August 1994,
- PATENT ABSTRACTS OF JAPAN vol. 95, no. 004 & JP,A,07 108918 (AISIN SEIKI CO LTD), 25.April 1995,
- PATENT ABSTRACTS OF JAPAN vol. 9, no. 98 (M-375), 27.April 1985 & JP,A,59 223548 (AKEBONO BRAKE KOGYO), 15.Dezember 1984,
- PATENT ABSTRACTS OF JAPAN vol. 14, no. 428 (M-1025), 14.September 1990 & JP,A,02 169359 (NIPPON DENSO CO.), 29.Juni 1990,
- PATENT ABSTRACTS OF JAPAN vol. 9, no. 149 (M-390), 25.Juni 1985 & JP,A,60 025835 (AKEBONO BRAKE KOGYO KK), 8.Februar 1985,

## Beschreibung

Die Erfindung betrifft eine hydraulische Kraftfahrzeugbremsanlage mit Radschlupfregelung nach dem Oberbegriff des Patentanspruchs 1.

Aus der DE 43 26 040 A1 geht bereits eine hydraulische Kraftfahrzeugbremsanlage mit Radschlupfregelung hervor, die an den in Diagonalbremskreisaufteilung angeordneten Hinterrädern sowohl als Druckmodulationsventile wirksam Einlaßund Auslaßventile aufweist als auch zur Volumenaufnahme während einer Antiblockierregelung stromabwärts zu den Auslaßventilen mit Druckmittelspeichern versehen ist. Den Vorderrädern sind ausschließlich als Druckmodulationsventile wirksame Einlaßventile zugeordnet, da der Druckabbau in den Vorderradbremsen über die den Hinterradbremsen zugeordneten Einlaß- und Auslaßventile erfolgt. Diese Schaltungsanordnung beeinträchtigt jedoch die Güte der Bremsdruckregelung, da durch die Hintereinanderschaltung der Druckmodulationsventile für die Radbremsen eines Diagonalbremskreises zwangsläufig eine Druckabsenkung in der Vorderradbremse auch zu einer Druckabsenkung an der Hinterradbremse führt. Befindet sich die Vorderradbremse in der Druckhaltephase, so ist auch keine Druckerhöhung in der Hinterradbremse möglich. Damit ist die Funktion der dargestellten Bremsanlage sowohl auf Fahrbahnen mit Niedrigreibwert als auch für Fahrbahnen mit sprunghafter Änderung von Hoch- auf Niedrigreibwert eingeschränkt.

Aus der JP-A-7108918 ist eine hydraulische Kraftfahrzeugbremsanlage mit Radschlupfregelung der im Oberbegriff des Anspruchs 1 angegebenen Art bekannt, deren Radbremsen der Hinterachse gemeinsam über ein elektromagnetisches Druckmodulationsventil mit dem Bremsdruckgeber verbunden sind. Eine weitere Druckmittelverbindung verbindet die Radbremsen der Hinterachse mit einer Pumpe, wozu in die Druckmittelverbindung eine Drossel eingesetzt ist, die in der Bremsdruckregelung gemeinsam mit dem Druckmodulationsventil den Druckverlauf in den Radbremsen bestimmt. Stromabwärts zur Drossel befindet sich ein Druchmittelspeicher, der mit der Pumpensaugseite verbunden ist. Der Druckmittelspeicher ist im Bremsenbetrieb permanent über die Drossel vom Druck der Radbremse beaufschlagt und damit zum Zwecke einer Antriebsschlupfregelung vorbefüllt, um bei ventilseitig abgetrenntem Bremsdruckgeber die Pumpe zu versorgen. Jede Radbremse der nicht angetriebenen Vorderachse weist zur Bremsdruckregelung in der Bremsleitung ein Druckmodulationsventil und in der Rücklaufleitung eine Drossel auf, über die das Druckmittel unmittelbar einer Pumpe und damit wieder dem Bremskreis zugeführt werden kann.

Die Bremsanlage gemäß JP-A-6211120 unterscheidet sich vom voran beschriebenen Bremsdruckregler durch eine Diagonalaufteilung der Bremskreise, wobei der Bremsdruck in den Vorderradbremsen mittels elektromagnetischer Einlaß- und Auslaßventile gesteuert wird, während der Bremsdruck in den Hinterradbremsen im Zusammenspiel von elektromagnetischen Einlaßventilen und in den Pumpensaugleitungen integrierten Drosseln geschieht, denen stromabwärts in Richtung der Pumpe öffnende Rückschlagventile folgen.

Die DE-A-41 32 469 beschreibt eine Bremsdruckregelanlage mit individueller Bremsdruckregelung der nicht angetriebenen Fahrzeugräder und gemeinsamer Bremsdruckregelung der motorseitg angetriebenen Fahrzeugräder einer Achse. Über elektromagnetische Einlaßventile und einem einzigen elektromagnetischen Auslaßventil für die Radbremsen der angetriebenen Fahrzeugräder ergibt sich eine im wesentlichen von der Schaltcharakteristik des Auslaßventils abhängige Bremsdruckregelung in den Radbremsen der angetriebenen Fahrzeugräder. Eine Rückwirkung der Druckregelung auf die jeweils benachbarte Radbremse wird mittels stromabwärts in die Rücklaufleitungen eingesetzten Rückschlagventilen verhindert. Durch die relativ kurzen Öffnungszeiten des Auslaßventils wird der nachfolgende Druckmittelspeicher nur kurzzeitig befüllt und durch den Pumpenbetrieb in der Bremsdruckregelung schleunigst entleert.

Daher ist es die Aufgabe der Erfindung, eine hydraulische Kraftfahrzeugbremsanlage mit Radschlupfregelung der eingangs genannten Art derart auszubilden, daß mit relativ geringem schaltungstechnischen und konstruktiven Aufwand eine vollständige Entleerung der Radbremsen beim Betrieb sowohl auf Fahrbahnen mit Niedrigreibwert als auch auf Fahrbahnen mit Reibwertsprüngen von Hoch- auf Niedrigreibwerte zustande kommt. Darüber hinaus soll mit der Bremsanlage eine elektronische Bremskraftverteilung möglich sein.

Diese Aufgabe wird erfindungsgemäß für eine Kraftfahrzeugbremsanlage der angegebenen Art mit den kennzeichnenden Merkmalen des Patentanspruchs 1 gelöst.

Weitere Merkmale und zweckmäßige Ausgestaltungsvarianten der Erfindung gehen aus den Unteransprüchen hervor, die anhand mehrerer Zeichnungen nachfolgend erläutert werden.

Es zeigen:
- Fig. 1: eine erste hydraulische Schaltung für eine Radschlupregelanlage mit Darstellung einer Bremskreisdiagonalen,
- Fig. 2: eine von Fig. 1 abweichende alternative Form einer hydraulischen Schaltung für eine Kraftfahrzeugbremsanlage mit Radschlupfregelung in Diagonalbremskreisaufteilung,
- Fig. 3: eine Erweiterung der Hydraulikschaltung nach Fig. 1 für Antriebsschlupfregelung.

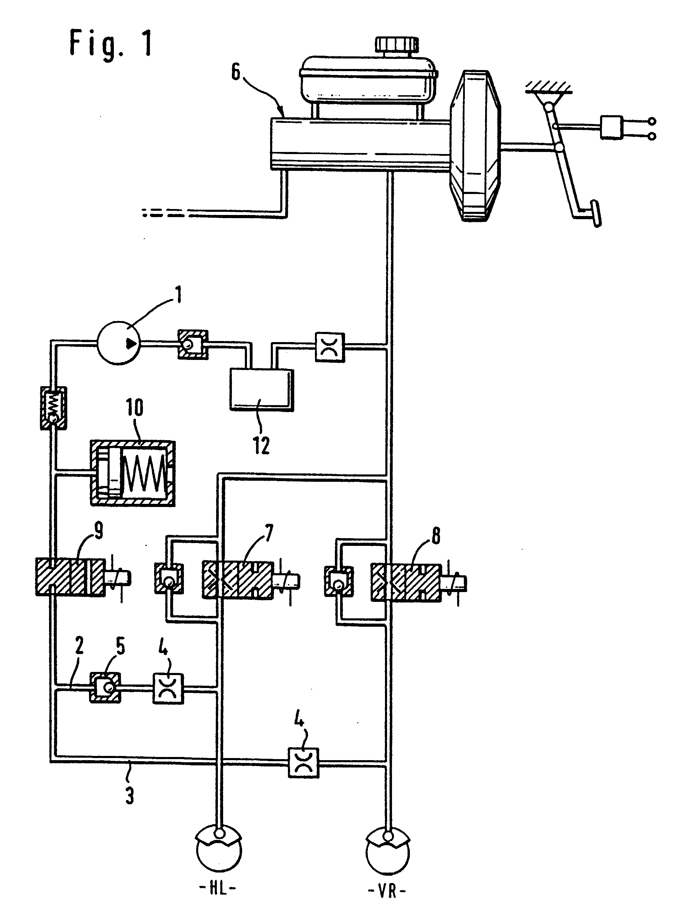

Dargestellt ist in Figur 1 ausschließlich eine Bremskreisdiagonale, wozu zwischen dem Bremsdruckgeber 6 und den diagonalen Radbremsen HL, VR die hydraulische Verbindung (Bremsleitung) auf zwei Bremsleitungszweige aufgeteilt ist, in die jeweils ein in der Grundstellung elektromagnetisch nicht erregtes, offenes Druckmodulationsventil 7, 8 eingesetzt ist. Die Druckmodulationsventile 7, 8 sind mit Blenden versehen, um den gewünschten Druckaufbaugradienten realisieren zu können. Zwischen den Druckmodulationsventilen 7, 8 und den Radbremsen HL, VR schließen sich an die Bremsleitungzweige jeweils voneinander getrennte Rücklaufleitungen 2, 3 an, die zur Saugseite einer Pumpe 1 führen, deren Druckanschluß über eine Geräuschdämpfungseinrichtung 12 in die zu den Radbremsen HL, VR führenden Bremsleitung einmündet. Die Pumpe 1 weist in Richtung des Sperrventils 9 schließende Rückschlagventile auf, die als Saug- und Druckventile an der Pumpe 1 angeordnet sind. Damit schließen sich an der Saugseite der Pumpe 1 die den beiden diagonalen Radbremsen HL, VR zugeordnete Rücklaufleitung 2, 3 an, wobei in die Rücklaufleitung 2, die an der hinteren Radbremse HL angeschlossen ist, erfindungsgemäß eine Drossel 4 und ein in Richtung der Pumpe 1 öffnendes Rückschlagventil 5 eingesetzt sind. Vorzugsweise ist das Rückschlagventil 5 stromabwärts zur Drossel 4 in die Rücklaufleitung 2 eingesetzt. Beide Rücklaufleitungen 2, 3 sind zum Anschluß an die Saugseite der Pumpe 1 stromaufwärts zu einem elektromagnetischen aufschaltbaren Sperrventil 9 zusammengeführt. Das Sperrventil 9 befindet sich hinter dem Anschlußpunkt der beiden Rücklaufleitungen 2, 3 in der zur Pumpe 1 führenden Saugleitung. Ein Druckmittelspeicher 10 ist in einem Nebenanschluß zur hydraulischen Verbindung der Rücklaufleitungen 2, 3 und der Pumpe 1 angeordnet. Durch die Zusammenführung der beiden Rücklaufleitungen 2, 3 stromaufwärts zum Sperrventil 9 kann vorteilhaft auf jeweils ein Sperrventil (Auslaßventil) an jeder Radbremse HL, VR verzichtet werden. Der dem Sperrventil 9 nachgeschaltete Druckmittelspeicher 10 erweist sich zur Bremsdruckregelung auf Fahrbahnen mit Reibwertsprüngen als zweckmäßiges Mittel, um bei plötzlicher Fahrbahnveränderung von Hoch- auf Niedrigreibwerte durch Aufschalten des Sperrventils 9 überschüssiges Druckmittel der jeweiligen Radbremse HL, VR im Druckmittelspeicher 10 aufzunehmen. Die Begrenzung des Druckmittelstroms anhand der Drosseln 4 in den Rücklaufleitungen 2, 3 ermöglicht im Zusammenwirken mit geeigneten Ventilschaltzeiten der Druckmodulationsventilen 7, 8 unter anderem eine Druckerhöhung in der hinteren Radbremse HL über das Druckniveau der diagonalen vorderen Radbremse VR. Hingegen geschieht auf vorteilhafte Weise ein Druckabbau oder Druckhalten in der jeweils zu regelnden Radbremse HL, VR durch die Wahl der Ventilschaltzeiten des ihr jeweils zugehörigen Druckmodulationsventils 7, 8 im Zusammenwirken mit dem Sperrventil 9, wobei die Motordrehzahl bei in der Radschlupfregelung permanent angetriebener Pumpe 1 in Abhängigkeit des Fahrzeugrades mit dem größten erforderlichen Druckabbaugradient gesteuert wird. Das Rückschlagventil 5 in der Rücklaufleitung 2 sorgt hierbei für eine Trennung der hinteren Radbremse HL von der vorderen Radbremse VR, so daß keinerlei Rückwirkung des Bremsdruckverlaufs von der vorderen Radbremse VR auf die hintere Radbremse HL erfolgt.

Im nachfolgenden wird anhand einzelner Beispiele auf die Funktionsweise der vorgestellten Bremsanlage eingegangen. Die Figur 1 zeigt die Druckmodulationsventile 7, 8 und das Sperrventil 9 jeweils in ihrer Grundstellung, die der Bremslösestellung als auch der radschlupffreien Normalbremsstellung entspricht. Zur Einstellung eines Haltedruckniveaus in wenigstens einer der Radbremsen HL, VR schaltet das entsprechende Druckmodulationsventil 7, 8 elektromagnetisch erregt in Sperrstellung, so daß zwischen dem jeweils gesperrten Druckmodulationsventil und dem in der Grundstellung gesperrten Sperrventil 9 ein konstantes Druckmittelvolumen eingespannt ist.

Ein Druckabbau in einer der beiden Radbremsen HL, VR geschieht durch umschalten des Sperrventils 9 in seine Offenstellung. Taktweises Öffnen des für den Haltedruck in der korrespondierenden Radbremse HL oder VR zugehörigen Druckmodulationsventils 7 oder 8 gleicht in Richtung des offenen Sperrventils 9 abfließendes Volumen durch nachfließendes Pumpenfördervolumen wieder aus. Damit wird erreicht, daß in der Radbremse mit dem gewünschten Haltedruckniveau das von der Pumpe 1 über das getaktete Druckmodulationsventil nachströmende Druckmittel trotz permanent geöffnetem Sperrventil 9 konstant eingestellt werden kann, während infolge der Sperrstellung des Druckmodulationsventils 7 oder 8 an der weiteren diagonalen Radbremse eine dynamische Nachförderung und damit ein Druckhalten verhindert wird. Vorzugsweise wird hierzu die Pumpendrehzahl und damit das erforderliche Fördervolumen in Abhängigkeit von der Radbremse mit dem größten Druckabbaugradient eingestellt.

Der Druckmittelspeicher 10 erweist sich im Hinblick auf einen plötzlichen Übergang von Hoch- auf Niedrigreibwerte der Fahrbahn als zwingend erforderlich, da dieser sodann das überschüssige Druckmittelvolumen der Radbremse bei Niedrigreibwert relativ schnell und in angemessener Menge aufnehmen kann.

Ein weiterer Vorteil der Erfindung ergibt sich durch die Anordnung des Rückschlagventils 5 in der Rücklaufleitung 2, da durch die Druckrückhaltefunktion des Rückschlagventils 5 das Druckniveau in der hinteren Radbremse über dem Druckniveau in der ventilfreien Rücklaufleitung 3 der vorderen Radbremse VR gehalten werden kann. Damit ergeben sich im Zusammenwirken mit der taktweisen Ansteuerung der Druckmodulationsventilen 7, 8 bei geöffnetem Sperrventil 9 variierbare Druckverteilungskennlinien zum Zweck einer elektronisch beeinflußbare Bremskraftverteilung, die infolge der Druckerhöhung an der hinteren Radbremse HL zur Erhöhung der Bremsleistung beitragen kann. Die Drosseln 4 (Blenden) in den Rücklaufleitungen 2, 3 als auch die Drosseln (Blenden) im Bereich der Druckmodulationsventile 7, 8 sind im Hinblick auf den gewünschten Druckaufbau- als auch Druckabbaugradienten auszuwählen.

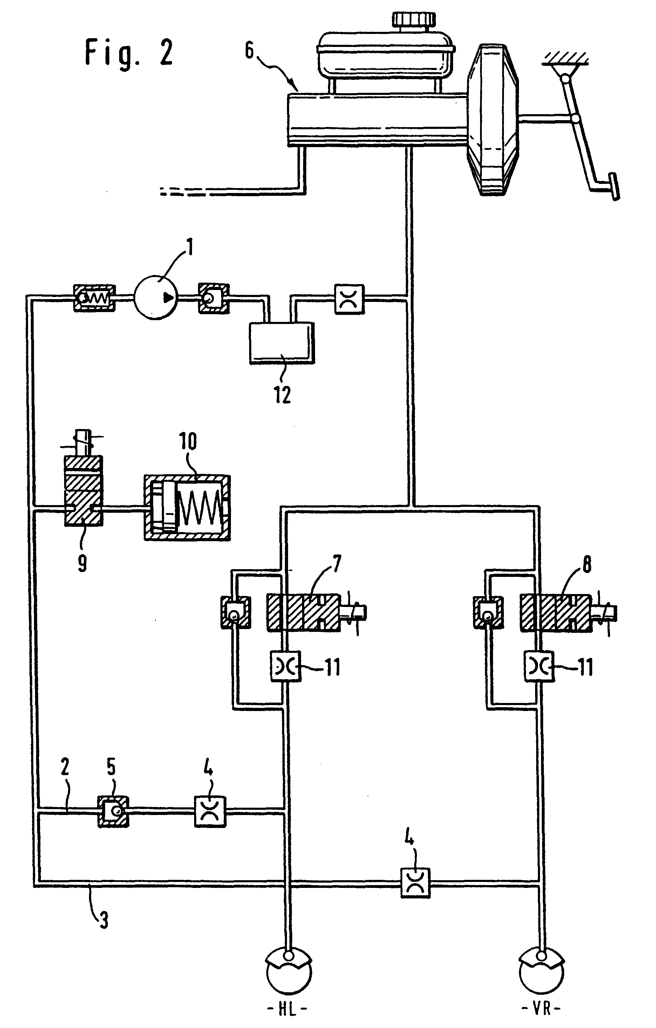

Die Figur 2 zeigt abweichend von der Darstellung nach Figur 1 das Sperrventil 9 im Nebenanschluß des Druckmittelspeichers 10, so daß in der Bremslösestellung als auch in der ausschließlich pedalbetätigten Normalbremsstellung die Rücklaufleitungen 2, 3 an der hinteren und vorderen Radbremse HL, VR eine direkte hydraulische Verbindung zur Saugseite der Pumpe 1 aufweisen. Im Hinblick auf die vorbeschriebene Funktionsweise der Figur 1 geschieht die Bremsdruckregelung für die Anlage nach Figur 2 zum Druckaufbau als auch Druckabbau durch geeignete individuelle Variation der Ventilschaltzeiten der Druckmodulationsventile 7, 8 und Drehzahlsteuerung der Pumpe 1, angepaßt an die jeweilige Volumenentnahme aus der Radbremse mit dem größten Druckabbaugradienten. Das Sperrventil 9 wird ausschließlich bei einer sprunghaften Fahrbahnänderung von Hoch- auf Niedrigreibwert geöffnet, um ein schnelles, vollständiges Entleeren der jeweiligen Radbremse HL, VR zu gewährleisten. Ferner kann das Sperrventil 9 durch Freigabe des volumenaufnehmenden Druckmittelspeichers 10 zur Pedalpositionierung verwendet werden, wenn infolge eines über das erforderliche Nachströmvolumen zu den Radbremsen hinausgehendes Pumpenüberschußvolumen ein Zurückstellen des Pedals an den Endanschlag auftreten würde.

Die in Figur 2 dargestellten Blenden 11 sind gleichfalls Bestandteil der in Figur 1 abgebildeten Druckmodulationsventile 7, 8 und bestimmen im Zusammenwirken mit den Drosseln 4 in den Rücklaufleitungen 2, 3 den Druckabbaugradient in der Radbremse HL, VR bei Niedrigreibwert. Soweit nicht auf alle weiteren Einzelheiten in der Figur 2 abgebildeten Merkmale eingegangen wird, so entsprechen diese den vorangegangenen Beschreibungsteilen zu Figur 1.

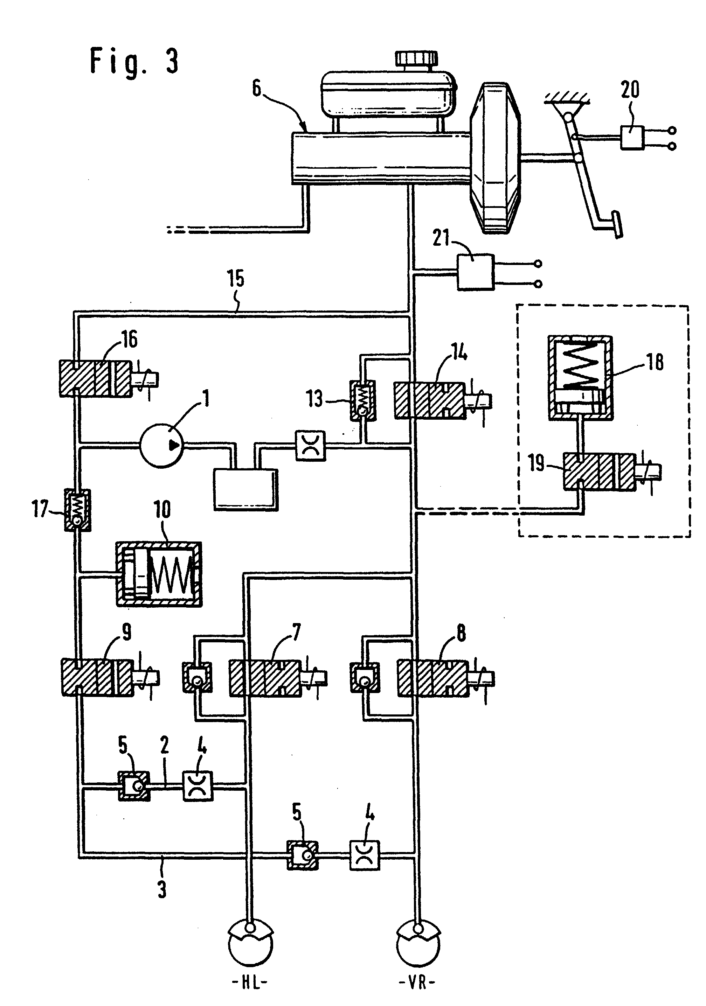

Die Figur 3 zeigt basierend auf einem schaltungstechnischen Aufbau nach Figur 1 eine Funktionserweiterung der Bremsanlage auf Antriebsschlupregelung. Hierzu ist vorgesehen, daß in die hydraulische Verbindung, die den Bremsdruckgeber 6 an die Pumpe 1 anschließt, ein in der Grundstellung geöffnetes Trennventil 14 angeordnet wird. Parallel zum Trennventil 14 befindet sich ein in Richtung des Bremsdruckgebers 6 öffnendes Rückschlagventil 13. Ferner ist zusätzlich an der hydraulischen Verbindung, die den Bremsdruckgeber 6 mit dem Trennventil 14 verbindet ein Druckmittelpfad 15 angeschlossen, der zur Saugseite der Pumpe 1 führt und in dem ein in der Grundstellung geschlossenes Sperrventil 16 eingesetzt ist. Der Druckmittelpfad 15 mündet somit in die Saugleitung der Pumpe 1 ein. Der Einmündungspunkt liegt hierbei zwischen einem in Richtung der Pumpe 1 öffnenden Rückschlagventil 17 und der Pumpe 1. Ferner ist an der das Trennventil 14 mit den Druckmodulationsventilen 7, 8 der Radbremsen HL, VR verlaufenden Druckmittelverbindung ein Hochdruckspeicher 18 angeschlossen, der durch ein in der Grundstellung geschlossenes Ventil 19 mit der zu den Radbremsen HL, VR führenden Bremsleitung angeschließbar ist.

Bezüglich der Funktionsweise der in Figur 3 abgebildeten Bremsanlage zwecks Bremslösstellung, Normalbremsung als auch blockiergeschützten Bremsdruckregelung, bestehen keine Unterschiede zu den voran in Figur 1 und 2 dargelegten Erläuterungen. Deshalb werden im nachfolgenden die bei Antriebsschlupf für eine Druckregelung an einer Radbremse HL, VR erforderlichen Maßnahmen beschrieben. In Fig. 3 wird die Betriebsweise der Bremsanlage durch Signale des Bremslichtschalters 20 am Pedal und eines den Arbeitsdruck des Bremsdruckgebers 6 aufnehmenden Drucksensors 21 überwacht. Unzulässiger Radschlupf an einem der angetriebenen Fahrzeugräder wird über nicht näher dargestellte Raddrehzahlsensoren in einer gleichfalls nicht dargestellten Auswerteelektronik erkannt und führt zu einer elektromagnetischen Erregung des Trennventils 14, um den Bremsdruckgeber 6 vom Druckkreis der Pumpe 1 zu trennen.

Zum Zwecke der Druckeinspeisung in Richtung der antriebsschlupfgeregelten Radbremse HL oder VR, schaltet gleichfalls elektromagnetisch erregt das Sperrventil 16 in seine Offenstellung, so daß die Saugseite der Pumpe 1 über den Druckmittelpfad 15 dem Bremsdruckgeber 6 Druckmittelvolumen entnehmen kann. Das damit vom Bremsdruckgeber 6 angesaugte Druckmittelvolumen gelangt über die Pumpe 1 zu den Druckmodulationsventilen 7, 8, die in Abhängigkeit des jeweils zwischen dem angetriebenen Rad und der Fahrbahn herrschende Schlupf regeln. Dies geschieht in vergleichbarer Weise mit den in Figur 1 und Figur 2 beschriebenen Druckhalte-, Druckabbau- und Druckaufbauzyklen, wobei eine gegenseitige Beeinflussung der einzelnen Radbremskreise in der Antriebsschlupfregelung durch Anordnung von Drosseln 4 und Rückschlagventilen 5 in den Rücklaufleitungen 2,3, verhindert ist. Wie bereits zu den vorangegangenen Figuren 1 und 2 erläutert wurde, werden sowohl der Druckaufbau- als auch der Druckabbaugradient durch Drosseln bzw. Blenden stromaufwärts der Radbremsen HL, VR als auch stromabwärts (Drossel 4)- beeinflußt. Damit kommen durch die Wahl der Drossel- bzw. Blendendurchmesser sowohl für den Betrieb in einer Bremsschlupf- als auch Antriebsschlupfregelung gleiche Druckgradienten zustande. In Anlehnung an die Grundfunktion einer Blockierschutzregelung, wie sie in den Ausführungsbeispielen nach Figur 1 und 2 beschrieben wurde, werden die Ventilschaltzeiten der Druckmodulationsventile 7, 8 variiert und eine Drehzahlsteuerung der Pumpe 1 vorgenommen, die sich an der jeweiligen Volumenentnahme aus der Radbremse mit der größten erforderlichen hydraulischen Druckentlastung orientiert. Das Sperrventil 9 in der Rücklaufleitung befindet sich hierzu in seiner Offenstellung. Da das Rückschlagventil 17 ausschließlich die Funktion eines Druckrückhalteventils übernimmt, kann bei entsprechend leichter Federvorspannung des Rückschlagventils 17 die Pumpe 1 nahezu ungehindert Druckmittel den Radbremsen entnehmen. Da es sich sowohl im Blockierschutzbetrieb als auch im Antriebsschlupfregelfalle um einen dynamischen Betriebsvorgang handelt, der im wesentlichen durch die Förderleistung der Pumpe 1, den Schaltzyklen der Druckmodulationsventile 7, 8 und des Sperrventils 9 bestimmt, lassen sich in Abhängigkeit der Drosseln 4 in den Rücklaufleitungen 2, 3 erhebliche Einsparungen an kostenintensiven Funktionsteilen erzielen.

In vorgestellter Ausführungform nach Figur 3 weist das Sperrventil 16 eine elektromagnetische Betätigung auf. Es ist jedoch gleichfalls möglich, daß das Sperrventil 16 in Abhängigkeit von einer die Einzelposition einstellenden Federkraft und anstehendem hydraulischen Differenzdruck die jeweils gewünschte Schaltstellung einnimmt. Ferner sieht die in Figur 3 dargestellte Hydraulikschaltung eine Erweiterung um einen Hochdruckspeicher 18 vor, der zwar kein zwingend erforderliches Bauteil darstellt, jedoch im Hinblick auf eine hochdynamische Druckregelung in einer antriebsschlupfgeregelten Radbremse kürzere Ansprechzeiten ermöglicht. Bei Verwendung eines solchen Hochdruckspeichers 18 wird dieser vor Beginn eine Radschlupfregelung mittels der Pumpe 1 zunächst vorgeladen, wozu sich das Ventil 19 elektromagnetisch in Offenstellung befindet. Die Pumpe 1 entnimmt hierzu vorzugsweise über das gleichfalls offengeschaltete Sperrventil 16 Druckmittel aus der Arbeitskammer des Bremsdruckgebers 6. Nach Vollaufladung des Hochdruckspeichers 18 ist das als Speicherladeventil wirksame Ventil 19 wieder in Sperrstellung und kann zu Beginn einer Antriebsschlupfregelung erneut elektromagnetisch geöffnet werden, um eine hochdynamische Versorgung und damit eine äußerst schnelle Bereitstellung von Druckmittel zu den Radbremsen zu gewährleisten, bis die Pumpe 1 das erforderliche Druckmittelvolumen bereitstellt. Die Einhaltung des zulässigen Systemdrucks während einer Antriebsschlupfregelung wird hierbei über das Rückschlagventil 13 eingestellt. Die Erweiterung der erfindungsgemäßen Schaltung nach Figur 3 ist im Hinblick auf die Darstellung in Verbindung mit Figur 1 nicht einzuschränken, sondern kann im Hinblick auf die erforderlichen Merkmale zur Antriebsschlupfregelung gleichfalls mit den schaltungstechnischen Merkmalen von Figur 2 kombiniert werden. Die von Figur 1 nach Figur 3 übertragenen Merkmale bilden somit nur eine der möglichen Varianten.

Es bleibt zu beachten, daß die Drosseln 4 in allen Ausführungsbeispielen jeweils einen konstanten Abfluß von Druckmitteln bewirkt, wobei die Pumpe 1 das Druckmittelvolumen bereitstellt. Die Druckgradientenänderung erfolgt dabei im wesentlichen durch die Ventiltaktzeiten, insbesondere durch Pulsweitenmodulation der Druckmodulationsventile 7, 8. Der Querschnitt der Drossel 4 ist in jedem Fall kleiner als der Blendenquerschnitt im Bereich der Druckmodulationsventile 7, 8.

### Bezugszeichenliste

- 1: Pumpe
- 2: Rücklaufleitung
- 3: Rücklaufleitung
- 4: Drossel
- 5: Rückschlagventil
- 6: Bremsdruckgeber
- 7: Druckmodulationsventil
- 8: Druckmodulationsventil
- 9: Sperrventil
- 10: Druckmittelspeicher
- 11: Blende
- 12: Geräuschdämpfungseinrichtung
- 13: Rückschlagventil
- 14: Trennventil
- 15: Druckmittelpfad
- 16: Sperrventil
- 17: Rückschlagventil
- 18: Hochdruckspeicher
- 19: Ventil
- 20: Bremslichtschalter
- 21: Drucksensor

## Patentansprüche

1. Hydraulische Kraftfahrzeugbremsanlage mit Radschlupfregelung, mit einem Bremsdruckgeber (6), der mit ein Paar Radbremsen (HL, VR) hydraulisch in Verbindung steht, mit in der Grundstellung offenen Druckmodulationsventilen (7, 8), die zwischen dem Bremsdruckgeber (6)und den Radbremsen (HL, VR) angeordnet sind, mit einer Pumpe (1), die mit ihrer Saugseite mit den Radbremsen (HL, VR) und mit ihrer Druckseite mit dem Bremsdruckgeber (6) verbunden ist, wobei an der Saugseite der Pumpe (1) zwei den beiden Radbremsen (HL, VR) zugeordnete Rücklaufleitungen (2, 3) angeschlossen sind, und wobei beide Rücklaufleitungen (2, 3) zur Bremsdruckregelung Drosseln (4) aufweisen, die zum Druckauf- und abbau in den Radbremsen (HL, VR) mit den Druckmodulationsventilen (7, 8) zusammenwirken, dadurch **gekennzeichnet,** daß mit der Saugseite der Pumpe (1), an die sich die beiden Rücklaufleitungen (2, 3) anschließen, ein in der Bremsdruckregelung elektromagnetisch aufschaltbares Sperrventil (9) und ein Druckmittelspeicher (10) verbunden sind, der derart bemessen ist, daß dieser in der Bremsdruckregelung sowohl auf Fahrbahnen mit Niedrigreibwert als auch bei einem Fahrbahnwechsel von Hoch- auf Niedrigreibwert das überschüssige Druckmittelvolumen der auf Niedrigreibwert befindlichen Radbremse (HL, VR) aufnimmt, daß das Sperrventil (9) sich stromabwärts zu den Drosseln (4) der beiden Rücklaufleitungen (2, 3) befindet, das zwecks Druckabben in Richtung des Druckmittelspeichers (10) permanent aufschaltbar ist, daß wenigstens eine Rücklaufleitung (2) ein in Richtung zur Saugseite der Pumpe (1) öffnendes Rückschlagventil (5) aufweist, und daß die beiden Radbremsen (HL, VR) in Diagonalbremskreisaufteilung am Bremsdruckgeber (6) angeschlossen sind.

2. Hydraulische Kraftfahrzeugbremsanlage nach Anspruch 1, dadurch **gekennzeichnet,** daß die mit der Drossel (4) und dem Rückschlagventil (5) versehene Rücklaufleitung (2) an einer hinteren Radbremse (HL) angeschlossen ist.

3. Hydraulische Kraftfahrzeugbremsanlage nach Anspruch 1 oder 2, dadurch **gekennzeichnet,** daß das Rückschlagventil (5) stromabwärts zur Drossel in die Rücklaufleitung (2) eingesetzt ist.

4. Hydraulische Kraftfahrzeugbremsanlage nach Anspruch 1, dadurch **gekennzeichnet,** daß sich die Rücklaufleitungen (2, 3) mit den daran angeschlossenen diagonalen Radbremsen (Hl, VR) über die in der Grundstellung offenen, elektromagnetisch nicht erregten Druckmodulationsventilen (7, 8) an den Bremsdruckgeber (6) anschließen.

5. Hydraulische Kraftfahrzeugbremsanlage nach Anspruch 1, dadurch **gekennzeichnet**, daß der Druckmittelspeicher (10) zwischen dem Sperrventil (9) und der Pumpe (1) in einem Nebenanschluß zur Pumpensaugleitung angeordnet ist.

6. Hydraulische Kraftfahrzeugbremsanlage nach Anspruch 1, dadurch **gekennzeichnet,** daß das Sperrventil (9) und der Druckmittelspeicher (10) in einem Nebenanschluß zur Saugseite der Pumpe (1) angeordnet sind.

7. Hydraulische Kraftfahrzeugbremsanlage nach Anspruch 1, dadurch **gekennzeichnet**, daß in Reihenschaltung zu den Druckmodulationsventilen (7, 8) in der hydraulischen Verbindung Blenden (11) vorgesehen sind.

8. Hydraulische Kraftfahrzeugbremsanlage nach Anspruch 1, dadurch **gekennnzeichnet,** daß in die Hydraulikverbindung zwischen dem Bremsdruckgeber (6) und dem Druckanschluß der Pumpe (1) an eine zur Radbremse (HL, VR) führende hydraulische Verbindung ein in der Grundstellung geöffnetes Trennventil (14) angeordnet ist, dem ein in Richtung des Bremsdruckgebers (6) öffnendes Rückschlagventil (13) parallel zugeordnet ist, das zur Einhaltung des zulässigen Systemdrucks während einer Antriebsschlupfregelung dient.

9. Hydraulische Kraftfahrzeugbremsanlage nach Anspruch 8, dadurch **gekennzeichnet,** daß an der hydraulischen Verbindung, die den Bremsdruckgeber (6) mit dem Trennventil (14) verbindet, ein Druckmittelpfad (15) angeschlossen ist, der zur Saugseite der Pumpe (1) führt, und in dem ein in der Grundstellung geschlossenes Sperrventil (16) eingesetzt ist.

10. Hydraulische Kraftfahrzeugbremsanlage nach Anspruch 9, dadurch **gekennzeichnet,** daß der Druckmittelpfad (15) zwischen einem in Richtung der Pumpe (1) öffnende Rückschlagventil (17) und der Pumpe (1) angeschlossen ist.

11. Hydraulische Kraftfahrzeugbremsanlage nach Anspruch 8, dadurch **gekennzeichnet,** daß an der Druckmittelverbindung, die das Trennventil (14) mit den Druckmodulationsventilen (7, 8) verbindet, ein Hochdruckspeicher (18) angeschlossen ist, der durch ein in der Grundstellung geschlossenes Ventil (19) von der Druckmittelverbindung getrennt ist.

## Claims

1. Hydraulic automotive vehicle brake system with wheel slip control, including a braking pressure generator (6) which is hydraulically connected to one pair of wheel brakes (HL, VR), pressure modulation valves (7, 8) that are open in their initial position and arranged between the braking pressure generator (6) and the wheel brakes (HL, VR), a pump (1) which is connected with its suction side to the wheel brakes (HL, VR) and with its pressure side to the braking pressure generator (6), wherein two return lines (2, 3) associated with the two wheel brakes (HL, VR) are connected to the suction side of the pump (1), and wherein both return lines (2, 3) include restrictors (4) for braking pressure control which interact with the pressure modulation valves (7, 8) for the pressure increase and pressure reduction in the wheel brakes (HL, VR),
**characterized** in that a shut-off valve (9) adapted to be electromagnetically opened in braking pressure control and a pressure fluid accumulator (10) are connected to the suction side of the pump (1) to which the two return lines (2, 3) are connected, and the pressure fluid accumulator (10) is so rated that it takes up the excessive pressure fluid volume of the wheel brake (HL, VR) which is on a low coefficient of friction during braking pressure control operations on road surfaces with a low coefficient of friction as well as in the event of a road surface change from high to low coefficients of friction, in that the shut-off valve (9) is provided downstream of the restrictors (4) of the two return lines (2, 3) and, for pressure reduction, is adapted to be permanently opened in the direction of the pressure fluid accumulator (10), in that at least one return line (2) has a non-return valve (5) which opens in the direction of the suction side of the pump (1), and in that the two wheel brakes (HL, VR) are connected to the braking pressure generator (6) in a diagonal brake circuit allotment.

2. Hydraulic automotive vehicle brake system as claimed in claim 1,
**characterized** in that the return line (2) provided with the restrictor (4) and the non-return valve (5) is connected to the rear wheel brake (HL).

3. Hydraulic automotive vehicle brake system as claimed in claim 1 or claim 2,
**characterized** in that the non-return valve (5) in inserted into the return line (2) downstream of the restrictor.

4. Hydraulic automotive vehicle brake system as claimed in claim 1,
**characterized** in that the return lines (2, 3) with the connected diagonal wheel brakes (HL, VR) are in communication with the braking pressure generator (6) by way of the electromagnetically non-energized pressure modulation valves (7, 8) which are open in their inactive position.

5. Hydraulic automotive vehicle brake system as claimed in claim 1,
**characterized** in that the pressure fluid accumulator (10) is arranged between the shut-off valve (9) and the pump (1) in a side conduit to the pump suction line.

6. Hydraulic automotive vehicle brake system as claimed in claim 1,
**characterized** in that the shut-off valve (9) and the pressure fluid accumulator (10) are arranged in a side conduit to the suction side of the pump (1).

7. Hydraulic automotive vehicle brake system as claimed in claim 1,
**characterized** in that orifices (11) are provided in the hydraulic connection in a series connection to the pressure modulation valves (7, 8).

8. Hydraulic automotive vehicle brake system as claimed in claim 1,
**characterized** in that a separating valve (14), open in its inactive position, is arranged in the hydraulic connection between the braking pressure generator (6) and the pressure port of the pump (1) leading to a hydraulic connection to the wheel brake (HL, VR), and a non-return valve (13) which opens in the direction of the braking pressure generator (6) and is used to maintain the allowable system pressure during traction slip control is arranged in parallel to the separating valve (14).

9. Hydraulic automotive vehicle brake system as claimed in claim 8,
**characterized** in that connected to the hydraulic connection between the braking pressure generator (6) and the separating valve (14) is a pressure fluid conduit (15) which leads to the suction side of the pump (1) and in which a shut-off valve (16) is inserted that is closed in its inactive position.

10. Hydraulic automotive vehicle brake system as claimed in claim 9,
**characterized** in that the pressure fluid conduit (15) is connected between a non-return valve (17), opening in the direction of the pump (1), and the pump (1).

11. Hydraulic automotive vehicle brake system as claimed in claim 8,
**characterized** in that connected to the pressure fluid connection which connects the separating valve (14) to the pressure modulation valves (7, 8) is a high-pressure accumulator (18) which is isolated from the pressure fluid connection by a valve (19) that is closed in its initial position.

## Revendications

1. Système hydraulique de freinage pour automobile, à régulation antipatinage des roues, comprenant un générateur (6) de pression de freinage en communication hydraulique avec une paire de freins de roues (ARG, AVD), comprenant des vannes (7, 8) de modulation de pression ouvertes en position de repos, disposées entre le générateur (6) de pression de freinage et les freins de roues (ARG, AVD), comprenant une pompe (1) dont le côté aspiration est relié aux freins de roues (ARG, AVD), et dont le côté refoulement est relié au générateur (6) de pression de freinage, deux conduites de retour (2, 3) respectivement associées aux deux freins de roues (ARG, AVD) étant raccordées au côté aspiration de la pompe (1), et les deux conduites de retour (2, 3) comportant des étranglements (4) en vue de la régulation de la pression de freinage, coopérant avec les vannes (7, 8) de modulation de la pression pour effectuer l'augmentation et la réduction de la pression dans les freins de roues (ARG, AVD),
caractérisé en ce que
une vanne d'arrêt (9) pouvant être commutée électromagnétiquement en position ouverte et un accumulateur (10) de fluide sous pression sont reliés au côté aspiration de la pompe (1), auquel sont reliés les deux conduites de retour (2, 3), l'accumulateur étant dimensionné de manière que, lors de la régulation de la pression de freinage, que ce soit sur des surfaces de routes à faible coefficient de frottement ou lors de changements de la surface de la route d'une valeur élevée à une valeur basse du coefficient de frottement, il puisse absorber le volume excédentaire de fluide sous pression provenant du frein (ARG, AVD) de la roue qui se trouve sur la surface à faible coefficient de frottement,
en ce que la vanne d'arrêt (9) se situe en aval des étranglements (4) des deux conduites de retour (2, 3) et peut être commutée de façon permanente en position d'ouverture en direction de l'accumulateur (10) de fluide sous pression, en vue de la diminution de la pression,
en ce que au moins l'une des conduites de retour (2) comporte un clapet de non-retour (5) s'ouvrant en direction du côté aspiration de la pompe (1), et
en ce que les deux freins de roues (ARG, AVD) sont reliés au générateur (6) de pression de freinage selon une répartition diagonale des circuits de freinage.

2. Système hydraulique de freinage automobile selon la revendication 1, caractérisé en ce que la conduite de retour (2) pourvue de l'étranglement (4) et du clapet de non-retour (5) est raccordée à un frein de roue arrière (ARC).

3. Système hydraulique de freinage automobile selon la revendication 1 ou la revendication 2, caractérisé en ce que le clapet de non-retour (5) est inséré dans la conduite de retour (2) en aval de l'étranglement.

4. Système hydraulique de freinage automobile selon la revendication 1, caractérisé en ce que les conduites de retour (2, 3) et les freins de roues (ARG, AVD) qui leur sont reliés en diagonale, rejoignent le générateur (6) de pression de freinage par l'intermédiaire de vannes (7, 8) de modulation de pression, ouvertes et électromagnétiquement non excitées en position de repos.

5. Système hydraulique de freinage automobile selon la revendication 1, caractérisé en ce que l'accumulateur (10) de fluide sous pression est disposé dans un branchement dérivé de la conduite d'aspiration de la pompe, entre la vanne d'arrêt (9) et la pompe (1).

6. Système hydraulique de freinage automobile selon la revendication 1, caractérisé en ce que la vanne d'arrêt (9) et l'accumulateur (10) de fluide sous pression sont disposés dans un branchement dérivé sur le côté aspiration de la pompe (1).

7. Système hydraulique de freinage automobile selon la revendication 1, caractérisé en ce que des diaphragmes (11) sont prévus dans les liaisons hydrauliques, branchés en série avec les vannes (7, 8) de modulation de pression.

8. Système hydraulique de freinage automobile selon la revendication 1, caractérisé en ce qu'une vanne d'isolement (14) ouverte en position de repos est disposée dans la liaison hydraulique entre le générateur de pression de freinage (6) et le raccord de refoulement de la pompe (1), relié à une liaison hydraulique conduisant au frein de roue (ARG, AVD), vanne à laquelle est associé un clapet de non-retour (13) s'ouvrant en direction du générateur (6) de pression de freinage, qui sert à maintenir la pression du système admise pendant une régulation antipatinage en traction.

9. Système hydraulique de freinage automobile selon la revendication 8, caractérisé en ce qu'un passage de fluide de pression (15) est branché sur la liaison hydraulique, qui relie le générateur (6) de pression de freinage à la vanne d'isolement (14), ce passage rejoignant le côté aspiration de la pompe (1) et contenant une vanne d'arrêt (16) fermée en position de repos.

10. Système hydraulique de freinage automobile selon la revendication 9, caractérisé en ce que le passage de fluide de pression (15) est raccordé entre un clapet de non-retour (17) s'ouvrant en direction de la pompe (1) et la pompe (1).

11. Système hydraulique de freinage automobile selon la revendication 8, caractérisé en ce qu'un accumulateur haute pression (18) est relié au passage de fluide de pression, qui relie la vanne d'isolement (14) aux vannes (7, 8) de modulation de la pression, l'accumulateur étant isolé du passage de fluide sous pression par une vanne (19) fermée en position de repos.
